(19) Europäisches Patentamt
European Patent Office
Office européen des brevets

(11) **EP 2 958 360 A1**

(12) **EUROPEAN PATENT APPLICATION**

(43) Date of publication:
**23.12.2015 Bulletin 2015/52**

(51) Int Cl.:
***H04W 24/08*** (2009.01)

(21) Application number: **14172791.7**

(22) Date of filing: **17.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Koninklijke KPN N.V.**
**2516 CK The Hague (NL)**

(72) Inventors:
• **Beerends, John**
**4584 PG Hengstdijk (NL)**

• **Wiarda, Sjoerd-Jan**
**2013 XB Haarlem (NL)**
• **Meeuwissen, Hendrik**
**2264 KK Leidschendam (NL)**

(74) Representative: **Wuyts, Koenraad Maria**
**Koninklijke KPN N.V.**
**Intellectual Property Group**
**P.O. Box 95321**
**2509 CH Den Haag (NL)**

(54) **Glass box models for predicting circuit switched speech quality in 3G telecommunications networks**

(57) A method for predicting speech quality in a voice call between a mobile terminal and a mobile coupling node is disclosed. The method includes obtaining M values of a power parameter measured M times at different points in time over a first time interval of the duration of the call, where the power parameter is a parameter indicative of transmitted power in one of a first direction and a second direction of the call, the first direction being an uplink direction from the mobile terminal to the mobile coupling node, the second direction being a downlink direction from the mobile coupling node to the mobile terminal. The method also includes calculating a power factor for the call based on the M values of the power parameter, and, based on the calculated power factor, calculating a speech quality indicator for the other one of the first direction and the second direction.

FIG. 4

EP 2 958 360 A1

**Description**

FIELD OF INVENTION

The disclosure generally relates to the field of telecommunications networks. In particular, though not necessarily, the disclosure relates to methods, systems, and computer program products for predicting speech quality in a voice call between a mobile terminal and a mobile coupling node carried out at least partially in a 3G telecommunications network.

BACKGROUND

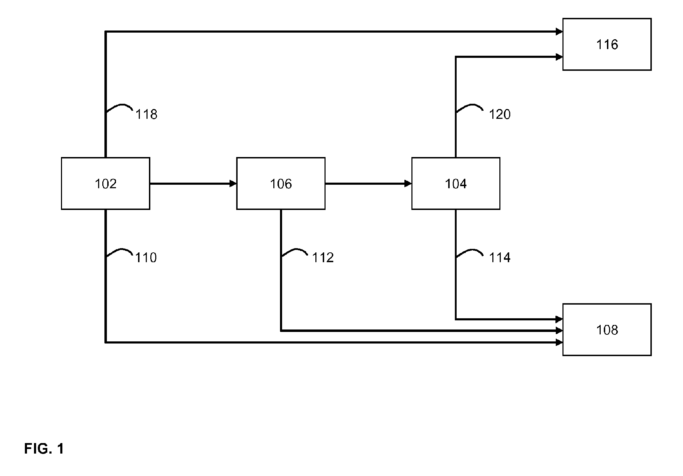

A major issue in modern telecommunications networks is determining relations between technical Key Performance Indicators (KPI's) as they can be measured in the network and customer experience as perceived by the customers. If it would be possible to model these relations correctly, then the models could be used in quality monitoring, network optimization, and individual customer complaint analysis, including root cause analysis.
In general, measurement approaches underlying such models could be divided into two categories. Models in one category, referred to as "black box models", require having one or more known parameters (e.g. traffic) in the telecommunications network as an input and a known perceived output in order to assess the perceived quality. Models in another category, referred to as "glass box models", only use technical parameters (i.e., the Key Performance Indicators, KPIs) that can be measured on the live traffic in the network to predict the perceived quality. Glass box models require access to network elements, making them suitable only for analyzing the quality by a network operator. On the other hand, black box models can be used for analyzing the quality without access to network elements, e.g. to assess quality of competing operators, but are less suitable for quality monitoring as they need a constant perceptual evaluation of a known input.
In particular, perceived speech quality appears to be an important factor in customer experience. FIG. 1 provides an overview of black box versus glass box measurement approaches in the uplink speech quality assessment of a call between a first terminal 102 and a second terminal 104 over a speech link 106, wherein the first terminal is a mobile terminal and the second terminal may be a mobile or a fixed terminal.
As shown with the lower branch in FIG. 1, glass box model 108 only uses technical parameters that can be measured on the live traffic between the first terminal 102 and the second terminal 106 to predict the perceived speech quality. Such parameters include parameters 110 measured on the first terminal 102, parameters 112 measured on the speech link 106 (i.e., the communication link between the terminals 102 and 104, e.g. measured in network nodes), and parameters 114 measured on the second terminal 104. Some examples of the parameters 110 include power levels for reception and transmission, interference, codec settings, and frequency response. Some examples of the parameters 112 include delay, bit error rate (BER), packet loss, and handover. Some examples of the parameters 114 in case of a mobile terminal include power levels for reception and transmission, interference, buffering strategy, codec settings, and frequency response.
On the other hand, as shown with the upper branch in FIG. 1, black box model 116 requires a known speech input, e.g. in terms of a known electrical input 118, and a known perceived output, e.g. in terms of a known electrical output 120, in order to assess the perceived speech quality.
In the early days of mobile telephony, glass box models were developed for assessing speech quality from technical parameters that can be measured in the GSM (i.e., 2G) networks such as Frames Erasure Rate (FER) and the Quality of the Received radio signal (RxQual).
For 3G networks, speech follow up strategies are being developed for mapping radio network parameters to the perceived speech quality but none of these strategies have been successful yet. For example, an article by M. Werner and P. Vary titled "Quality Control for UMTS-AMR Speech Channels" (InterSpeech, Lisbon 2005, pp. 3157-3160) indicates that the Frame Erasure Rate (FER) provides a good indication of the perceived speech quality but unfortunately the FER is difficult to monitor on a 24/7 basis in a radio network and is usually not provided by 3G radio systems.
What is needed in the art is a glass box model for predicting speech quality in 3G telecommunications networks that improves or eliminates some of the drawbacks described above.

SUMMARY

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

To reduce or eliminate at least some of the problems discussed above, according to one aspect of an embodiment of the present invention, a computer-implemented method for predicting speech quality in a voice call between a mobile terminal (in standardization more formally known as "User Equipment", UE) and a mobile coupling node is provided. The voice call is carried out at least partially over a 3G telecommunications network. The method includes obtaining M values ($Power\_KPI_i$, i=1,...M) of a power parameter measured M times at different points in time over a first time interval of the duration of the voice call. The power parameter is a parameter indicative of a transmitted power, typically a high frequency (HF) radio transmitted power in one of a first direction and a second direction of the voice call. Thus, the power parameter is a KPI related to the transmitted power. The first direction is an uplink direction from the mobile terminal to the mobile coupling node while the second direction is a downlink direction from the mobile coupling node to the mobile terminal. The method further includes calculating a power factor (Power_Factor) for the call based on the measured M values of the power parameter. Preferably, the power factor is calculated as an Lp norm average of the M measured values of the power parameter, which is calculated as

$$Power\_Factor = \sqrt[p]{\frac{1}{M} \sum_{i=1,...M} Power\_KPI_i^p} \quad (1)$$

where, as known in the art, p is the power of the Lp norm average. The method also includes calculating a speech quality indicator for the other one of the first direction and the second direction based on the calculated power factor.

As used herein, the term "mobile coupling node" is used to describe a node within a 3G telecommunications network that is coupled, during the voice call, with the mobile terminal described above. In other words, the mobile coupling node is a node with which a communication path to the terminal is established during the call, where, the term "communication path" in this context refers to one or more paths or one or more connections or channels for communicating data between the terminal and the mobile coupling node established to carry encoded voice during the call according to one or more protocols defined e.g. in the 3GPP standard. For example, in some embodiments, the mobile coupling node could be an intermediate node in the 3G telecommunications network that couples the mobile terminal to the fixed terminal in case of the voice call being a mobile-to-fixed call (i.e., a voice call between a mobile terminal and a fixed terminal). On the other hand, in case of the voice call being a mobile-to-mobile call (i.e., a voice call between two mobile terminals), the mobile coupling node could be an intermediate node in the 3G telecommunications network that couples the two mobile terminals. In such a case, a voice call between a first mobile terminal and a second mobile terminal includes therein a call between the first mobile terminal and the mobile coupling node concatenated with a call between the mobile coupling node and the second mobile terminal.

Preferably, the first time interval is the time period over the entire duration of the voice call. However, in some embodiments, the first time interval could be a time interval smaller than the entire voice call duration. In such embodiments, different power factors may be calculated (i.e., different Lp norm averaging's are carried out) for the different sub-intervals within the entire voice call duration, leading to a time-varying speech quality indicator over the entire duration of the voice call (one speech quality indicator per sub-interval). This could be particularly useful for voice calls longer than about 30 seconds.

Embodiments of the present invention are based on the insight that the transmitted power measured in one direction during a call carried out at least partially over the 3G network is indicative of the speech quality in the other (i.e., reverse) direction of the voice call. One explanation for this finding could be that the closed loop coupling between transmitted and received radio power used in the 3G technology causes a correlation between the transmitted power in the up/down link with the speech quality in the reversed direction because the radio paths and radio transmission conditions of the up- and downlink are generally correlated.

In an embodiment, the speech quality indicator is calculated for the downlink direction and the M measured values comprise values of the power parameter in the uplink direction, the power parameter being the uplink HF radio transmit power (UL_TxPow). In such an embodiment, preferably, the power factor is calculated according to formula (1) above with p equal to 5.

In one further embodiment, the method may further include determining an Inter Radio Access Technology Hand Over KPI (IRATHO) indicative of whether a handover from the 3G telecommunications network to a 2G telecommunications network occurred during the voice call, and the speech quality indicator is calculated further based on the IRATHO. Such an embodiment provides the advantage of taking into consideration handovers between 3G and 2G networks which have also been determined to play a major role in the final perceived speech quality.

As known in the art, the term "handover" refers to the event of transferring (i.e., handing over or handing off) a connection between a mobile terminal and one antenna (source antenna) of a base station to a connection between that terminal and a different antenna (target antenna) of the same or a different base station. Thus, a handover from the 3G network to the 2G network implies transferring the connection between the terminal and an antenna in a 3G network (i.e., the connection between the terminal and an antenna of a NodeB, i.e., the UMTS base station) to a connection between that terminal and an antenna in a 2G network (i.e., the connection between the terminal and an antenna of a GSM base station).

In one still further embodiment, the handover is determined to have occurred during the voice call when a predefined message indicative of an attempt of the handover, e.g. a "RANAP RELOCATION COMMAND" message, is captured. Thus, when such a predefined message is not captured, it is determined that the handover has not occurred during the voice call.

In an alternative embodiment, the speech quality indicator is calculated for the uplink direction and the M measured values comprise values of the power parameter in the downlink direction, the power parameter being downlink code power value of a base station (DL_NBtCPV). In such an embodiment, preferably, the power factor is calculated according to formula (1) above with p greater than 5, more preferably p going to infinity, thus effectively resulting in taking the maximum value of the M measured values of the power parameter as the power factor (DL_NBtCPV_max).

In one further embodiment, the method may further include determining a bit error rate factor (UL_BER_Factor) indicative of the bit error rate of the voice call in the uplink direction (UL_BER) and the speech quality indicator is calculated further based on the determined UL_BER factor.

In an embodiment, the determination of the UL_BER factor may include obtaining N values ($UL\_BER_j$, j=1,...N) of a UL_BER (i.e., a BER KPI) measured N times at different points in time over a second time interval of the duration of the voice call, the second time interval being the same or different than the first time interval and either overlapping, partially overlapping or not overlapping with the first time interval. In such an embodiment, the BER factor (UL_BER_Factor) is calculated based on the N measured values of the UL_BER. Preferably, the UL_BER factor is calculated as an Lp norm average of the N measured values of the UL_BER, which is calculated as

$$UL\_BER\_Factor = \sqrt[p]{\frac{1}{N} \sum_{j=1,..N} UL\_BER_j^p} \quad (2)$$

where, again, p is the power of the LP norm average, and, preferably, p is taken to be equal to 5.

Similar to the discussion above with respect to the first time interval, preferably the second time interval is the time period over the entire duration of the voice call. However, in some embodiments, the second time interval could be a time interval smaller than the entire voice call duration. In such embodiments, different UL_BER factors may be calculated (i.e., different Lp norm averaging's are carried out) for the different sub-intervals within the entire voice call duration, leading to a time-varying speech quality indicator over the entire duration of the voice call (one speech quality indicator per sub-interval). Again, this could be particularly useful for voice calls longer than about 30 seconds.

In one further embodiment in the case when the speech quality indicator is calculated for the uplink direction, the speech quality indicator calculated as described above may be referred to as a first intermediate speech quality indicator and the method may further include steps for calculating a second intermediate speech quality indicator for the uplink direction using a different, second, model. Such calculation would include determining a first additional parameter (BERclass10) indicative of whether the N measured values of the BER contain a value larger than a predefined value (BERmax), determining a second additional parameter (event2b) indicative of whether one or more conditions for a 3G handover to an inter-frequency neighbor have been met during the voice call, where, preferably, an event that the one or more conditions for the 3G handover to the inter-frequency neighbor are met is an event 2b as defined in the 3GPP standard (e.g. as defined in TS 25.331 of the 3GPP standard), determining a third additional parameter (event3a) indicative of whether one or more conditions for a handover from the 3G network to a 2G network have been met during the voice call, where, preferably, an event that the one or more conditions for the handover from the 3G telecommunications network to the 2G telecommunications network are met is an event 3a as defined in the 3GPP standard (e.g. as defined in TS 25.331 of the 3GPP standard), and calculating the second intermediate speech quality indicator for the uplink direction based on the determined first, second, and third additional parameters. A final speech quality indicator may then be calculated based on the first and second intermediate speech quality indicators, e.g. as an average of the first and second indicators. Such an embodiment takes advantage of using two different models for calculating speech quality in the uplink direction.

As used herein, a handover to an inter-frequency neighbor refers to a handover from an antenna operating on one frequency to an antenna operating on another frequency within the same frequency band, the two antennas either being antennas of two different base stations (i.e., so-called "soft handover") or being antennas of a single base station (i.e., so-called "softer handover").

According to another aspect of the invention, another computer-implemented method for predicting speech quality in the uplink direction in a voice call between a mobile terminal and a mobile coupling node as described above is disclosed. Again, the voice call is carried out at least partially over a 3G telecommunications network and the uplink direction is the direction from the mobile terminal to the mobile coupling node. Such a method is based on only using the second model (i.e., without combining the calculation of the speech quality indicator with the first intermediate speech quality indicator obtained from the first model, as described above). The method includes obtaining N values ($UL\_BER_j$, j=1,...N) of the UL_BER (i.e., the BER KPI) measured N times at different points in time over at least a part of the entire duration of the voice call, determining a first parameter (BERclass10) indicative of whether the N measured values of the BER contain a value larger than a predefined value (BERmax), determining a second parameter indicative of whether one or more conditions for a 3G handover to an inter-frequency neighbor have been met during the voice call, wherein, preferably, an event that the one or more conditions for the 3G handover to the inter-frequency neighbor are met is an event 2b as defined in the 3GPP standard (e.g. as defined in TS 25.331 of the 3GPP standard), determining a third parameter indicative of whether one or more conditions for a handover from the 3G telecommunications network to a 2G telecommunications network have been met during the voice call, where, preferably, an event that the one or more conditions for the handover from the 3G telecommunications network to the 2G telecommunications network are met is an event 3a as defined in the 3GPP standard (e.g. as defined in TS 25.331 of the 3GPP standard), and calculating the speech quality indicator for the uplink direction based on the determined first, second, and third parameters.

In various embodiments of any of the methods described above, the speech quality indicator may advantageously comprise a mean opinion score (MOS) or a derivative thereof.

According to another aspect of the present invention, a data processing system and a device for predicting speech quality in a voice call as described above are provided. Each of the data processing system and the device comprise at least a processor configured to carry out method steps described herein. Such a device could be included within e.g. a 24/7 speech quality monitoring device for continued evaluation of the customer experienced speech quality.

The disclosure may also relate to a computer program, implemented on computer-readable storage medium, and to a computer-readable storage medium, preferably non-transitory, storing such a computer program. The computer program may comprise software code portions configured for, when run on a computer, executing the method steps according to any of the methods described in the present disclosure.

The disclosure will further be illustrated with reference to the attached drawings, which schematically show embodiments according to the disclosure. It will be understood that the disclosure is not in any way restricted to these specific embodiments. Moreover, combinations of any of the embodiments and limitations are envisioned by the disclosure.

BRIEF DESCRIPTION OF THE DRAWINGS

Aspects of the invention will be explained in greater detail by reference to exemplary embodiments shown in the drawings, in which:

FIG. 1 provides an overview of black box versus glass box measurement approaches in the uplink speech quality assessment of a call between a mobile terminal and a fixed terminal over a speech link;

FIG. 2 shows a schematic illustration of a telecommunications system, according to one embodiment of the present invention;

FIG. 3 provides a flow diagram of method steps for obtaining the glass box models presented herein, according to one embodiment of the present invention;

FIG. 4 provides an illustration of an experimental set up for creating an uplink speech quality database, according to one embodiment of the present invention;

FIG. 5 provides an illustration of a definition of the MOS-scale based on absolute category ratings, according to one embodiment of the present invention;

FIG. 6 provides an Lp norm averaging example for a KPI that is measured 10 times during a single call, according to one embodiment of the present invention;

FIG. 7 illustrates a scatter plot of the first model for the speech quality in the downlink direction, according to one embodiment of the present invention;

FIG. 8 illustrates a scatter plot of the first model for the speech quality in the uplink direction, according to one embodiment of the present invention;

FIG. 9 provides a flow diagram of method steps for calculating a speech quality indicator using either the first model for the downlink direction or the first model for the uplink direction, according to one embodiment of the present invention;

FIG. 10 illustrates a scatter plot of the second model for the speech quality in the downlink direction, according to one embodiment of the present invention;

FIG. 11 illustrates a scatter plot of the second model for the speech quality in the uplink direction, according to one embodiment of the present invention;

FIG. 12 illustrates a scatter plot of the third model for the speech quality in the uplink direction, according to one embodiment of the present invention;

FIG. 13 illustrates a scatter plot of measured MOS values vs predicted MOS values calculated by averaging MOS values calculated using the second and the third models for the speech quality in the uplink direction, according to one embodiment of the present invention;

FIG. 14 illustrates a scatter plot of measured MOS values vs predicted MOS values calculated using the second model for the speech quality in the downlink direction, according to one embodiment of the present invention; and

FIG. 15 shows a block diagram illustrating an exemplary data processing system that may be used to calculate a speech quality indicator, according to one embodiment of the present disclosure.

DETAILED DESCRIPTION

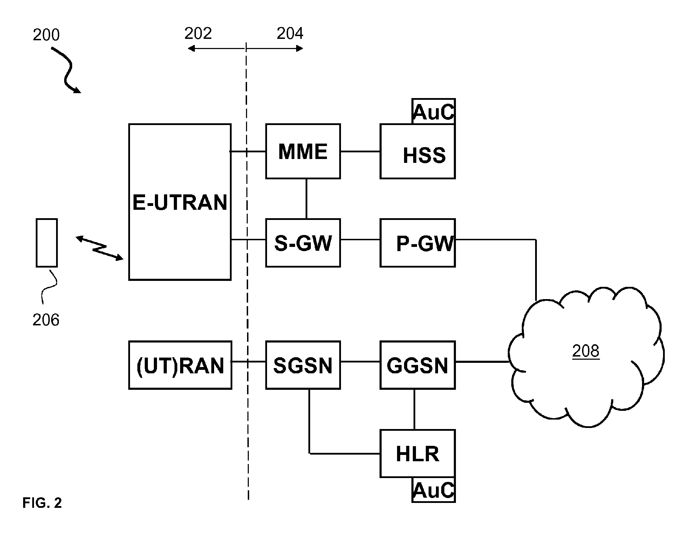

FIG. 2 shows a schematic illustration of a telecommunications system 200. The telecommunications system 200 comprises a radio access network 202 (also indicated as E-UTRAN or RAN in FIG. 2) and a core network 204 containing various elements or nodes as described in further detail below.

In the telecommunications system of FIG. 2, three generations of networks are schematically depicted together for purposes of brevity. A more detailed description of the architecture and overview can be found in 3GPP TS 23.002 which is included in the present application by reference in its entirety.

The lower branch of FIG. 2 represents a GPRS or UMTS telecommunications network.

For a GSM/GPRS telecommunications network (i.e., a 2G/2.5G telecommunications network), a radio access network 202 comprises a plurality of base stations (combination of a BSC and a BTS) and one or more Radio Network Controllers (RNCs), not shown individually in FIG. 2. The core network 204 comprises a Gateway GPRS Support Node (GGSN), a Serving GPRS Support Node (SGSN, for GPRS) or Mobile Switching Centre (MSC, for GSM, not shown in FIG. 2), and a Home Location Register (HLR) combined with an Authentication Centre (AuC). The HLR contains subscription information for mobile terminals 206 (sometimes referred to as "user equipment" (UE) or user devices) and the AuC contains a shared secret key K to be used for authentication and key agreement (AKA) procedures.

For a UMTS radio access network (UTRAN) (i.e., a 3G telecommunications network), the radio access network 202 also comprises a Radio Network Controller (RNC) connected to a plurality of NodeBs, also not shown. In the core network 204, the GGSN and the SGSN/MSC are conventionally connected to the HLR/AuC that contains subscription information and shared secret keys K of the mobile terminals 206.

It should be noted that the RNC functionality in GSM and UMTS networks is formally part of the RAN. The RNC functionality may be implemented in one or more base stations. Such a configuration is known as a collapsed architecture.

The upper branch in FIG. 2 represents a next generation telecommunications network, commonly indicated as Long Term Evolution (LTE) system or Evolved Packet System (EPS). In such a network, the radio access network 202, indicated as E-UTRAN, comprises evolved NodeBs (eNodeBs or eNBs) providing wireless access for the mobile terminals 206. The core network 204 comprises a PDN Gateway (P-GW) and a Serving Gateway (S-GW). The E-UTRAN of the EPS is connected to the S-GW via a packet network. The S-GW is connected to a Home Subscriber Server HSS and a Mobility Management Entity MME for signalling purposes. The HSS includes a subscription profile repository SPR and is combined with an Authentication Centre (AuC) that stores a shared secret key K for AKA procedures.

For GPRS, UMTS and LTE telecommunications network, the core network 204 is generally connected to a further packet network 208, e.g. the internet, using e.g. a gateway (e.g the P-GW).

Further information of the general architecture of a EPS network can be found in 3GPP TS 23.401.

The models described herein are for predicting speech quality of a voice call between a mobile terminal and a mobile coupling node carried out at least partially in a 3G telecommunications network as described above.

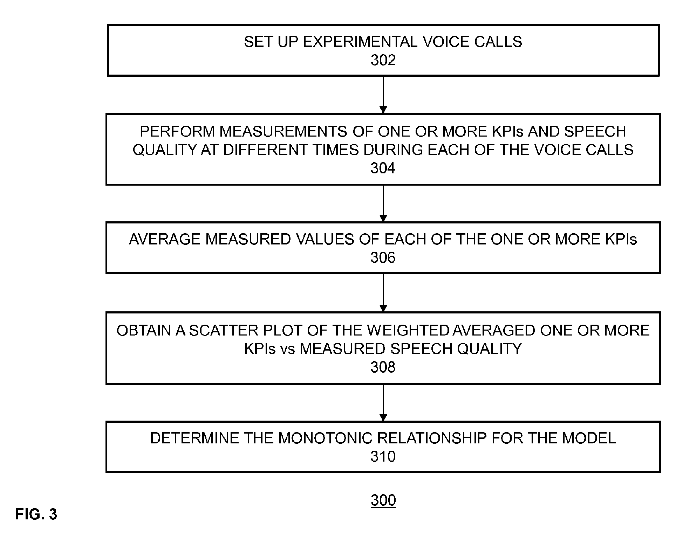

The basic idea in any glass box model is to have usable correlations between selected KPIs as available for measurement in the (radio) network and the perceived speech quality. The models described herein present KPIs for which usable correlation results were obtained and the correlation results were further optimized. Even though a skilled person would know how to come up with a model that correlates measured KPIs to some speech quality indicator once suitable KPIs have been selected, one approach to establishing the models described herein is explained below, with reference to FIGs. 3-6.

FIG. 3 provides a flow diagram 300 of method steps for obtaining the glass box models presented herein, according to one embodiment of the present invention.

The method 300 may begin in step 302, where voice calls are set up to collect empirical data including measurements of the selected KPIs associated with each voice call and assessment of the speech quality of the voice calls. In the present experiments, the duration of the voice calls was between 10 and 20 seconds. The experiments used a direct tracing approach (UE tracing) on calls that were set up between a mobile terminal and a standard analogue PSTN line (i.e., a fixed terminal).

In step 304, the measurements are performed at different points in time over at least some time intervals, but preferably over the complete call duration, of each of the voice calls. In this step, one or more of the selected KPIs are measured during each of the voice calls, thus resulting in a plurality (a set) of measured KPIs for each voice call. In addition, a particular speech quality indicator, such as e.g. Mean Opinion Score (MOS), is measured for each of the experimental voice calls, resulting in a single value of a speech quality indicator per time interval of the call when the measurements are taken.

In the present experiments, the measurements of step 304 were carried out in different cities, using both static and dynamic (e.g. a car driving between the cities or walking in the cities) measurements. In order to obtain a wide variety of both static and dynamic measurements, ranging from excellent to bad quality, also measurements inside a tunnel, parking garage and with the mobile terminal inside a Faraday cage have been carried out.

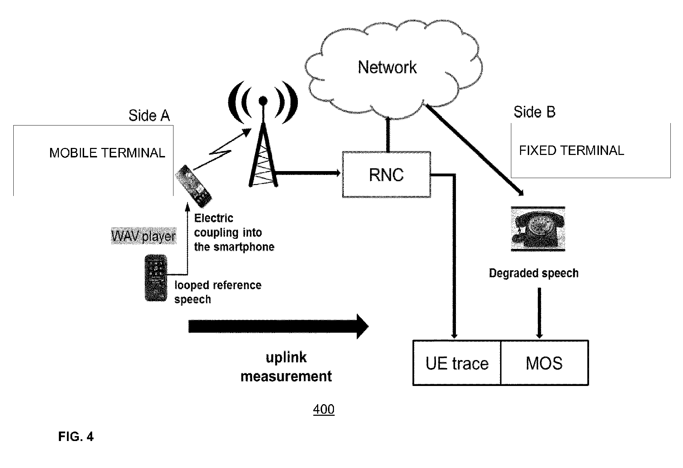

In the present experimental set-up shown in FIG. 4 for the uplink measurements as an experimental set-up 400, a 100% speech activity file was looped and played through an adaptor box into the microphone input of the mobile terminal (e.g., iPhone 4S) and judged at the PSTN side, in terms of MOS, by an expert listener over a call duration between 10 and 20 seconds. This quantified the uplink speech quality in a quick and reproducible manner. For the downlink, the looped speech was coupled into the microphone input of the PSTN handset through an adaptor box and judged by an expert listener on the mobile terminal side. The speech quality indicator assessed by an expert listener is referred to herein as "measured speech quality indicator".

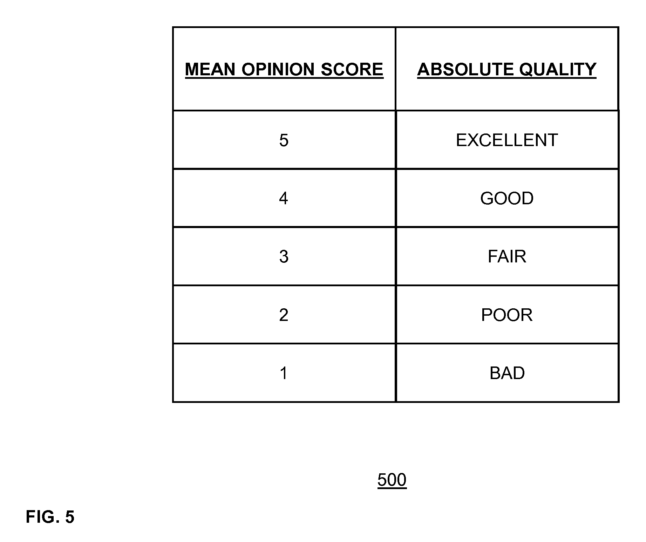

In the present experimental set-up, speech quality was assessed using expert listening on the absolute category rating scale 500 shown in FIG. 5, with a score of 4.8 for HiFi super wideband speech. When running subjective experiments that use super wideband speech as the best quality, the standard narrowband speech (i.e., the band width of 300 - 3400 Hz) will get a MOS of around 3.6, while speech that has been coded with a high quality full rate AMR speech codec will get a MOS of around 3.4.

In the present experiments, the KPIs were measured in step 304 by Ericsson UE trace logging equipment at varying time intervals, as determined by the equipment. Thus for a certain time period, e.g. 20 seconds, the number of measurements can fluctuate. Sometimes there may even be no measurement available during the certain time period.

The selected KPIs that were used in the development of the speech quality models were the following:

- UL_TxPow, the HF radio uplink transmit power of the mobile terminal, reported by the Ericsson logging equipment on an unspecified scale with an observed measurement range between 21 and 94;
- DL_NBtCPV, the downlink Node B code power value, reported by the Ericsson logging equipment on an unspecified scale with an observed measurement range between 54 and 98;
- IRATHO, Inter Radio Access Technology Hand Over, in the form of a captured "RANAP RELOCATION COMMAND" message. This represents the situation where the estimated quality of the currently used 3G UTRAN frequency is below a certain threshold and the estimated quality of the 2G network is above a certain threshold leading to a handover to a GSM neighbor (3G to 2G handover). This resulted in a measurement value of either 1 (the handover happened) or 0 (the handover did not happen);
- UL_BER, uplink bit error rate, reported by the Ericsson logging equipment with a measurement range between 0 (no errors) and 65535 (maximum error count);
- UL_BLER, uplink block error rate (BLER), reported by the Ericsson logging equipment as a percentage value between 0.0 and 100.0;
- DL_BER, downlink bit error rate, reported by the Ericsson logging equipment with a measurement range between 0 (no errors) and 65535 (maximum error count);
- DL_BLER, downlink block error rate, reported by the Ericsson logging equipment as a percentage between 0.0 and 100.0;
- RRC Handover event 2b, an event 2b as defined in TS 25.331 of the 3GPP standard, which is a parameter indicative of whether the estimated quality of the currently used frequency is below a certain threshold and the estimated quality of a non-used frequency of an inter-frequency 3G neighbor is above a certain threshold, resulting in that a handover to the inter-frequency 3G neighbor may occur during the voice call (i.e., a possible 3G to 3G handover). The observed measurement range was 0, 1 or 2, indicating the number of times that conditions for a possible inter-frequency 3G handover have been met;
- RRC Handover event 3a, an event 3a as also defined in TS 25.331 of the 3GPP standard, which is a parameter indicative of whether the estimated quality of the currently used 3G UTRAN frequency is below a certain threshold and the estimated quality of the 2G network is above a certain threshold in most cases leading to an handover to a GSM neighbor (i.e., 3G to 2G handover). This event is thus closely related to the IRATHO which actually indicates a successful 3G to 2G handover. The observed measurement range for the event 3a was 0, 1, 2, 3 or 4, indicating the number of times that conditions for a possible IRATHO have been met.

As the speech quality indicator is a single number obtained for each time interval, but some of the KPIs (e.g. the uplink transmit power UL_PowTx or the downlink transmit power DL_NBtCPV) are measured multiple times over the duration of the time interval, an averaging of such KPIs over the time interval has to be carried out in order to be able to correlate the perceived speech quality with a single valued average KPI. This is done in step 306, where, for each voice call, for each KPI that was measured several times during the call, the plurality of measured values are averaged to come up with a value referred to herein as a "KPI factor" (e.g. "power factor" when the KPI is transmit power such as e.g. UL_PowTx, or "BER factor" when the KPI is e.g. UL_BER).

In an embodiment, the averaging may be done using Lp norm averaging over the time interval. For M measurements of a particular KPI, the KPI factor is then calculated as:

$$KPI\_Factor = \sqrt[p]{\frac{1}{M}\sum_{i=1,..M} KPI_i^p} \quad (3)$$

where, as known in the art, "p" is the power of the Lp norm average, "M" is the number of measurements, "i" is the index of the measurement of the M measurements, "KPli" is the *ith* measurement value of the KPI, and "KPI_Factor" is the Lp norm averaged value of the M measured values of the KPI.

Formula (3) is the general formula for performing Lp norm averaging for any number of measurements of any KPI. For example, when KPI is a parameter indicative of a transmit power in either uplink or downlink of a voice call (such a parameter referred to herein as a "power parameter" and denoted as "Power_KPI") and M measurements of this parameter are taken over a specified time period within the duration of a voice call, the KPI factor of formula (3) is denoted herein as "Power_Factor" and is calculated according to formula (1) described above.

In order to maximize correlation results, the averaging of the different KPIs over the duration of the measurements for each voice call could be carried out with different powers of the Lp norms (i.e., different values of p). With p being equal to 1, the Lp norm average calculated according to (3) yields a normal average value (i.e., the sum of M measured values divided by the number M of measurements). With the limiting case of p being equal to 1/x, where x goes to infinity, the Lp norm average calculated according to (3) is equivalent to taking the minimum value of the M measured values of a particular KPI. With the limiting case of p going to infinity, the Lp norm average calculated according to (3) is equivalent to the maximum value of the M measured values.

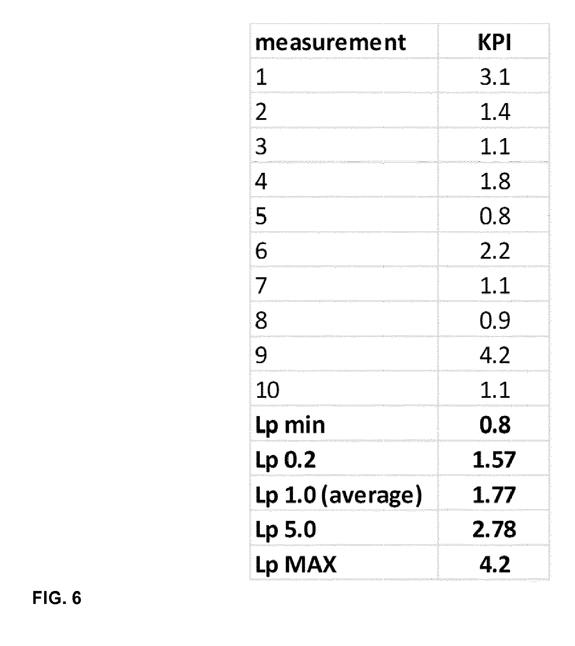

FIG. 6 provides an Lp norm averaging example for a KPI that is measured 10 times during a single call, according to one embodiment of the present invention. The table in FIG. 6 illustrates ten measured values of the KPI (the decimal values shown in the right column) for the 10 measurements (measurements 1, 2,... 10 shown in the left column). The table in FIG. 6 also illustrates the KPI factor values calculated according to formula (3) for "Lp min" (i.e., p being equal to 1/x, where x goes to infinity), "Lp 0.2" (i.e., Lp norm average calculated with p being equal to 0.2), "Lp 1.0" (i.e., Lp norm average calculated with p being equal to 1.0), "Lp 5.0" (i.e., Lp norm average calculated with p being equal to 5.0), and "Lp MAX" (i.e., p going to infinity).

In some cases, the resulting average factor for a KPI may be clipped to a maximum value, i.e. values larger than a particular maximum value may be set to the maximum value. As known in the art of empirical modeling, this is typically done when the correlation modelling provides no improvement in correlation or even deteriorates when values larger than the maximum value are used.

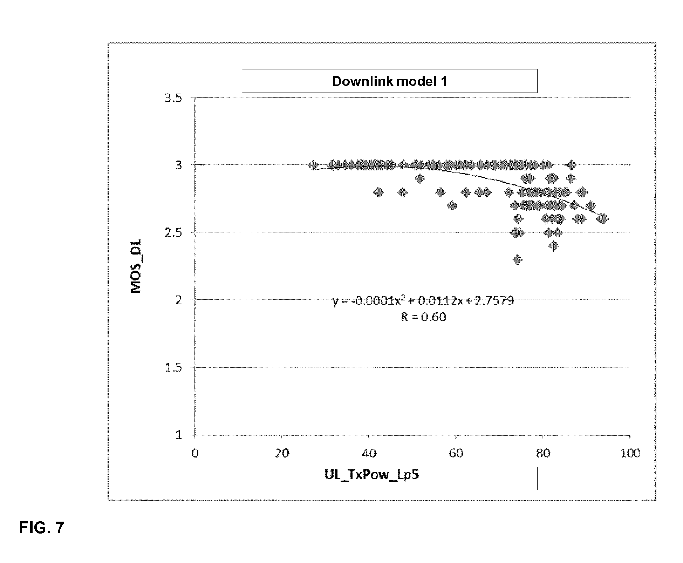

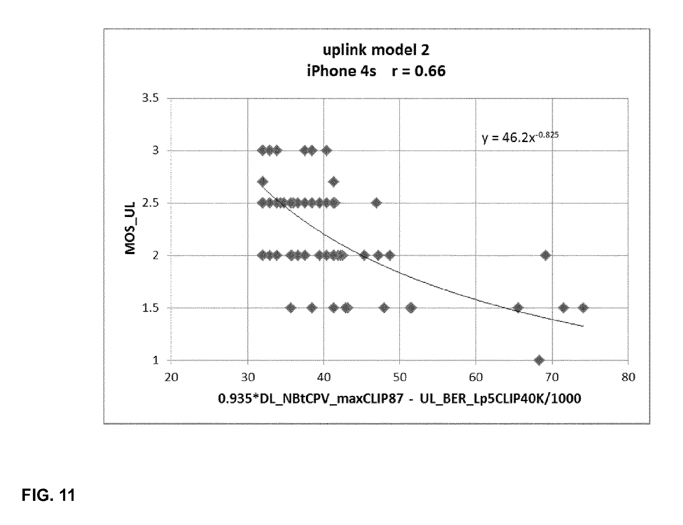

The method 300 may then proceed to step 308, where a scatter plot is obtained, such as illustrated e.g. FIGs. 7, 8, 10, 11, and 12 described below, where the y-axis represents the speech quality indicator as measured in step 304. In case the model only uses one KPI (i.e. a one-dimensional model), the x-axis represents the resulting value of that KPI for the call based on the measurements of that KPI in step 304, i.e. either the single measured value of the KPI if the KPI was only measured a single time for the call (e.g. IRATHO) or the KPI factor as calculated in step 306, e.g. as the Lp norm averaged KPI, if the KPI was measured multiple times (e.g. DL_NBtCPV or UL_TxPow). In case the model uses two or more KPIs (i.e., a two- or higher- dimensional model), the x-axis represents a weighted combination of the two or more KPIs, where, again, each of those KPIs is presented either as the single measured value of the KPI if the KPI was only measured a single time for the call or the KPI factor as calculated in step 306, e.g. as the Lp norm averaged KPI, if the KPI was measured multiple times. For the multi-dimensional models, the weighting over the resulting values of the different KPIs is optimized to obtain maximum correlation with the subjectively assessed speech quality. An example of such a weight function is 0.935*DL_NBtCPV_MaxCLIP87-UL_BER_Lp5CLIP40K/1000 for the 2nd model for the uplink speech quality described herein, illustrated in FIG. 11.

The method may end in step 310, where, from the scatter plot of step 308, a monotonic relation between the speech quality indicator (y) and the Lp norm averaged and weighted KPI's (x) of the one or more measured technical KPIs is established. An example of such a relation is the exponential function $y=46.2*x^{-0.825}$ obtained for the 2nd model for the uplink speech quality described herein, illustrated in FIG. 11.

In this manner, a correspondence between the measurements of the technical KPIs and subjective MOS values could be established, allowing to separately model the up- and downlink quality of a voice call.

In some embodiments, if voice calls are significantly longer than about 30 seconds, an analysis can be carried out that uses 10-20 seconds moving averages to obtain time varying MOS scores over the voice call duration.

Furthermore, alternative to having an expert listener assessing MOS of each voice call in step 304, the speech quality could be measured by using an objective perceptual black box model. In such a model, a high-quality voice recording may be coupled into the mobile link, and a high-quality voice recording may be made of the degraded output. Both the input and degraded output could then be used to calculate a speech quality MOS. Just as with the approach of the subjective expert listener, this approach would result in a single measured speech quality indicator for each voice call that can be matched to the Lp norm averaged KPIs over the voice call duration.

Measurements according to steps 302-304 described above resulted in one set of empirical data for modelling speech quality in the uplink direction (i.e. with the speech quality indicator being measured at the fixed terminal of FIG. 4) and one set of empirical data for modelling speech quality in the downlink direction (i.e. with the speech quality indicator being measured at the mobile terminal of FIG. 4). Each of these two sets of data included, per each experimental voice call out of a plurality of set-up calls, one measured value of speech quality indicator and one or more measured values of each of the particular KPIs listed above. Processing the acquired empirical data according to steps 306-308 described above then resulted in two different usable models for the speech quality in the downlink direction and three different usable models for the speech quality in the uplink direction. These models are now discussed.

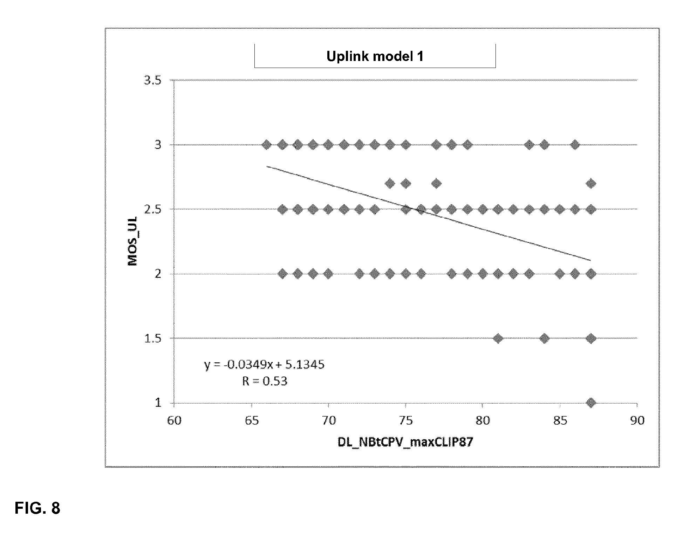

The expectation that the BLER (i.e., UL_BLER or DL_BLER) is one of the most useful KPIs was not confirmed. Instead, it was determined that, both for the uplink and for the downlink, speech quality indicator measured in one direction was dependent on the KPI indicative of transmitted power measured in the opposite direction. This finding formed the basis for the first model for the downlink direction and first model for the uplink direction. The scatter plot obtained according to step 306 described above for the first model for the downlink speech quality is illustrated in FIG. 7. The scatter plot obtained according to step 306 described above for the first model for the uplink speech quality is illustrated in FIG. 8.

As shown in FIG. 7, the monotonic relationship established between the transmitted power in the uplink direction, shown on the x-axis as "UL_TxPow_Lp5" indicating that the uplink transmit power KPI UL_TxPow was averaged using Lp norm average (equation (3) above) with p=5, and the speech quality indicator in the downlink direction, shown on the y-axis as "MOS_DL" (i.e., DownLink Mean Opinion Score), is as follows:

$$y=-0.0001x^2+0.0112x+2.7579 \quad (4)$$

Correlation of 0.6 was established for this model.

As shown in FIG. 8, the monotonic relationship established between the transmitted power in the downlink direction, shown on the x-axis as "DL_NBtCPV_maxCLIP87" indicating that the downlink transmit power KPI DL_NBtCPV was clipped, after averaging, to the maximum value of 87, and the speech quality indicator in the uplink direction, shown on the y-axis as "MOS_UL" (i.e., UpLink Mean Opinion Score), is as follows:

$$y=-0.0349x+5.1345 \quad (5)$$

Correlation of 0.53 was established for this model.

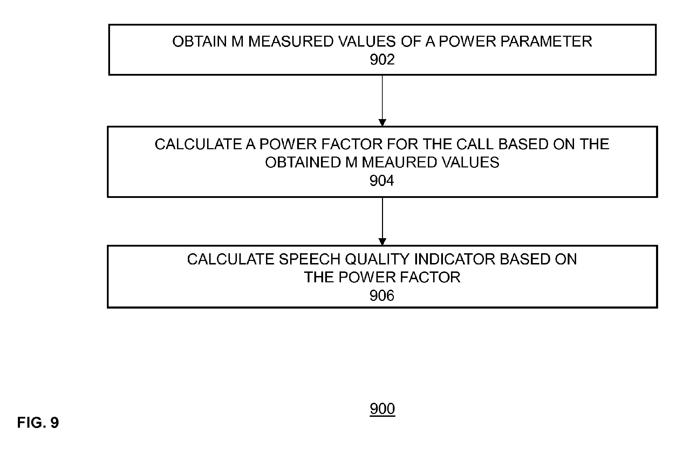

FIG. 9 provides a flow diagram 900 of method steps for calculating a speech quality indicator for a voice call using either the first model for the downlink direction or the first model for the uplink direction, according to one embodiment of the present invention. The method begins in step 902, where M measurements of the power parameter (Power_KPI) either in the uplink direction or in the downlink direction of the call are obtained, the M measurements taken at different points in time over at least a first time interval of the duration of the call.

In step 904, a power factor (Power_Factor) for the call is calculated based on the measured M values of the power parameter. In this step the M measured values of the power parameter are combined to yield a single value, preferably using Lp norm averaging as shown with equation (1).

In step 906, the speech quality indicator for the direction opposite to that for which the power parameter was measured is calculated, based on the power factor calculated in step 904, using the monotonic relation between the power factor and the speech quality indicator as established for the model.

Thus, the method illustrated in FIG. 9 covers two models - first model for the downlink direction and first model for the uplink direction.

With reference to the scatter plot of FIG. 7, the method of FIG. 9 for the downlink direction would include obtaining, in step 902, M measured values of the transmitted power in the uplink direction (UL_TxPow), calculating, in step 904, the power factor as an Lp norm average of the M values of UL_TxPow with p=5 (UL_TxPow_Lp5), and calculating, in step 906, the speech quality indicator for the downlink direction (MOS_DL) as variable "y" according to formula (4), with variable "x" being equal to the power factor calculated in step 904.

Similarly, with reference to the scatter plot of FIG. 8, the method of FIG. 9 for the uplink direction would include obtaining, in step 902, M measured values of the transmitted power in the downlink direction (DL_NBtCPV), calculating, in step 904, the power factor as an Lp norm average of the M values of DL_NBtCPV with p going to infinity (DL_NBtCPV_max) clipped to the value of 87 (DL_NBtCPV_maxCLIP87), and calculating, in step 906, the speech quality indicator for the uplink direction (MOS_DL) as variable "y" according to formula (5), with variable "x" being equal to the power factor calculated in step 904.

Since the first models for the downlink and uplink directions presented in FIGs. 7 and 8 each calculate a speech quality indicator based on only one measured KPI, these models are referred to as "one-dimensional" models. While the correlation results for the one-dimensional first models for the downlink and the uplink directions were adequate, analyzing combinations of several different KPIs (i.e., multi-dimensional modelling) yielded models with even higher correlation outcomes.

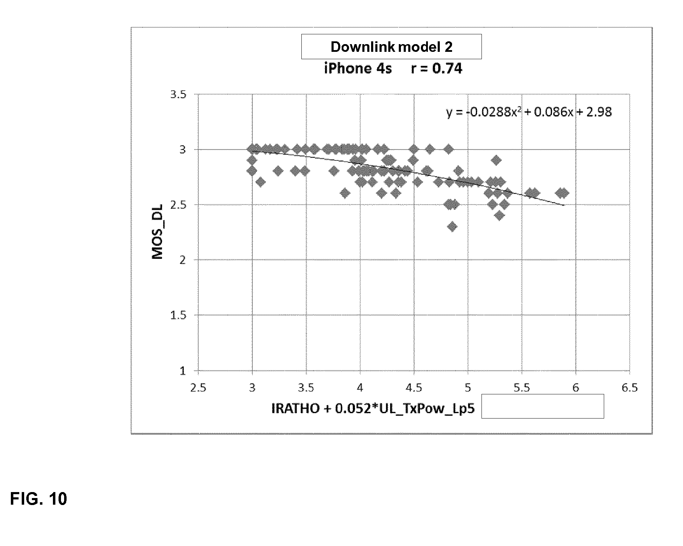

From the empirical data obtained according to steps 302-304 described above, it was determined that the speech quality indicator in the downlink direction was dependent on a combination of the KPI factor indicative of transmitted power measured in the opposite direction (i.e., UL_TxPow) and IRATHO. This finding formed the basis for the second model for the downlink direction. The scatter plot obtained according to step 306 described above for the second model for the downlink speech quality is illustrated in FIG. 10.

As shown in FIG. 10, the combination of these two KPIs that yielded the optimum correlation results was determined to be:

$$IRATHO+0.52*UL\_TxPow\_Lp5 \qquad (6),$$

where the M values of the uplink transmit power KPI (UL_TxPow) were averaged using Lp norm average of equation (3) with p=5 (UL_TxPow_Lp5) and the value of IRATHO for the call was either 1 (i.e., the 3G to 2G handover occurred during the call) or 0 (i.e., the 3G to 2G handover did not occur during the call), depending on whether or not a "RANAP RELOCATION COMMAND" message was captured at the logging equipment.

As also shown in FIG. 10, the monotonic relationship established between the combination of two KPIs according to equation (6), shown on the x-axis, and the speech quality indicator in the downlink direction, shown on the y-axis as "MOS_DL" is as follows:

$$y=-0.0288x^2+0.086x+2.98 \qquad (7)$$

Correlation of 0.74 was established for this model.

Thus, if the uplink transmit power UL_TxPow was measured M times, the resulting M values were averaged as explained in association with the first model for the downlink speech quality to obtain the power factor UL_TxPow_Lp5, and the power factor UL_TxPow_Lp5 is then combined with the determined value of the IRATHO parameter according to equation (6), then the resulting combined value could be used as the variable "x" according to equation (7) to calculate the speech quality indicator for the downlink direction MOS_DL (variable "y" in equation (7)).

Turning to the second model for the uplink direction, from the empirical data obtained according to steps 302-304 described above, it was determined that the speech quality indicator in the uplink direction was dependent on a combination of the KPI factor indicative of transmitted power measured in the opposite direction (i.e., DL_NBtCPV) and UL_BER. This finding formed the basis for the second model for the uplink direction. The scatter plot obtained according to step 306 described above for the second model for the uplink speech quality is illustrated in FIG. 11.

As shown in FIG. 11, the combination of these two KPIs that yielded the optimum correlation results was determined to be:

$$0.935*DL\_NBtCPV\_MaxCLIP87-UL\_BER\_Lp5CLIP40K/1000 \qquad (8),$$

where the M values of the downlink transmit power KPI (DL_NBtCPV) were averaged using Lp norm average of equation (3) with p going to infinity (DL_NBtCPV_max) and clipped to the value of 87 (DL_NBtCPV_maxCLIP87) to obtain the KPI factor for the downlink transmit power KPI, and the values of the uplink BER (UL_BER) measured N times over a second time interval of the duration of the call were averaged using Lp norm average of equation (3) with p=5 (UL_BER_Lp5), clipped to the value of 40000 (UL_BER_Lp5CLIP40K) and divided by 1000 (UL_BER_Lp5CLIP40K/1000) to obtain the KPI factor for the uplink BER KPI.

As also shown in FIG. 11, the monotonic relationship established between the combination of two KPIs according to equation (8), shown on the x-axis, and the speech quality indicator in the uplink direction, shown on the y-axis as "MOS_UL" is as follows:

$$y = 46.2x^{-0.825} \qquad (9)$$

Correlation of 0.66 was established for this model.

Thus, if the downlink transmit power DL_NBtCPV was measured M times, the maximum value over the resulting M values DL_NBtCPV_max was determined and clipped to the value of 87 to obtain the power factor DL_NBtCPV_maxCLIP87, and the power factor DL_NBtCPV_maxCLIP87 is then combined with the power factor UL_BER_Lp5CLIP40K/1000 calculated with an Lp averaging with p=5, the combination being according to equation (8), then the resulting combined value could be used as the variable "x" according to equation (9) to calculate the speech quality indicator for the uplink direction MOS_UL (variable "y" in equation (9)).

Examination of the scatter plots of FIG. 10 and FIG. 11 for the second models for the down- and uplink, respectively, show a clear asymmetry between the opposite links, the average uplink quality being significantly lower than the downlink quality.

Furthermore, the modelling result of FIG. 10 shows that the closed loop coupling used in 3G technology causes a correlation between the uplink transmitted power and the downlink speech quality. It also shows that the average speech quality is lower when during the call a successful 3G to 2G handover occurs. A non-successful handover would also lead to a lower quality, with either the call being dropped or the 3G radio quality most likely causing an unacceptably low speech quality.

The modelling result of FIG. 11 shows that the closed loop coupling used in 3G technology causes a correlation between the downlink code power value and the uplink speech quality.

The combined up/downlink results thus show that the closed loop coupling used in 3G technology causes a correlation between the transmitted power in the up/down link with the quality of the reversed direction.

One more, a third, model has been constructed for predicting the speech quality in the uplink direction. The third model is based on determining three parameters, which, when taken together, can provide an indication of the speech quality. The first parameter (BERclass10) takes into consideration the uplink BER KPI (UL_BER), measured N times over a time period within the voice call as described above. The first parameter then takes on a first predefined value (e.g. a value of "1") if the N measured values of UL_BER contain at least one value that is larger than a predefined BER value (BERmax) and takes on a second predefined value (e.g. a value of "0") otherwise. In the present model, the predefined value BERmax was taken to be 65535. Thus, if no value of 65535 is observed in the measured values of UL_BER, then the parameter BERclass10 is assigned a value of "0", and if at least one value of 65535 is observed, a value of "1" is assigned. This parameter is combined with a second and a third parameter dependent on, respectively, events 2b and 3a as defined in TS 25.331 of the 3GPP standard. Event 2b refers to the event that one or more conditions for a handover to a 3G inter-frequency neighbor are satisfied, thus indicating a possible handover to the inter-frequency neighbor within the 3G network, while event 3a refers to the event that one or more conditions for a handover from a 3G network to a 2G network are satisfied, thus indicating a possible 3G-to-2G handover. The second parameter (event2b) is clipped to a maximum value of 1 (event2BCLIP1), indicating whether at least one possible 3G inter-frequency handover has been observed but not necessarily has occurred. The third parameter (event3a) is clipped to a maximum value of 1 (event3aCLIP1) indicating whether at least one possible handover to 2G has been observed but not necessarily has occurred.

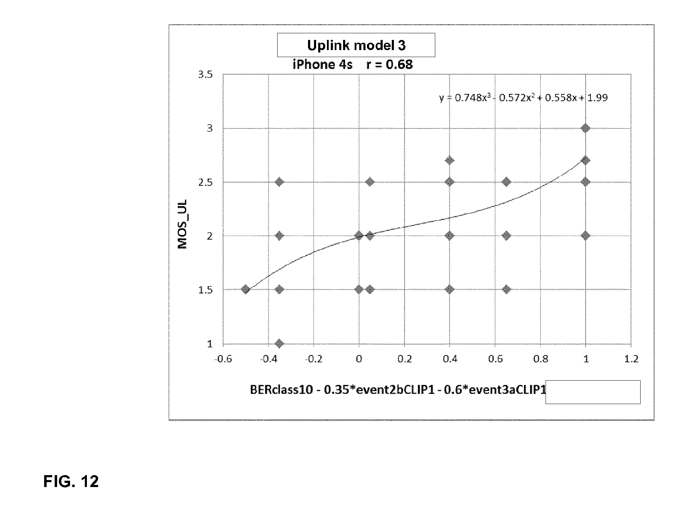

FIG. 12 illustrates a scatter plot of the third model. As shown in FIG. 12, the combination of the first, second, and third parameters as described above that yielded the optimum correlation results was determined to be:

$$\text{BERclass10} - 0.35 * \text{event2bCLIP1} - 0.6 * \text{event3aCLIP1} \quad (10)$$

As also shown in FIG. 12, the monotonic relationship established between the combination of the three KPIs according to equation (10), shown on the x-axis, and the speech quality indicator in the uplink direction, shown on the y-axis as "MOS_UL" is as follows:

$$y=0.748x^3-0.572x^2+0.558x+1.99 \quad (11)$$

Correlation of 0.68 was established for this model.

Thus, if the uplink bit error rate UL_BER was measured N times, the resulting N values were analyzed to determine whether they contain a value greater than the BERmax value of 65535 to obtain the first parameter BERclass10, if it was determined whether event 2b occurred at least once during the call to obtain the second parameter event2bCLIP1, and if it was determined whether event3a occurred at least once during the call to obtain the third parameter event3aCLIP1, the three parameters combined according to equation (10), then the resulting value from the equation (10) could be used as the variable "x" according to equation (11) to calculate the speech quality indicator for the uplink direction MOS_UL (variable "y" in equation (11)).

The model of FIG. 12 shows that the average speech quality is lower when, during the call, preparations for a 3G to 2G handover occur, especially in combination with an inter-frequency neighbor handover.

In an embodiment, the method for predicting speech quality in the uplink direction could comprise combining the speech quality indicators calculated using the second and the third models. Thus, each of the second and the third models could, first, be used separately to calculate the MOS value based on the monotonic relations derived from the scatter plots of FIG. 11 and FIG. 12, respectively, after which the two MOS values would be averaged. Such a combined model would, therefore, exploit five different KPIs. Instead of combining the second model with the third model, it is also possible to combine the first model with the third model, exploiting four different KPIs.

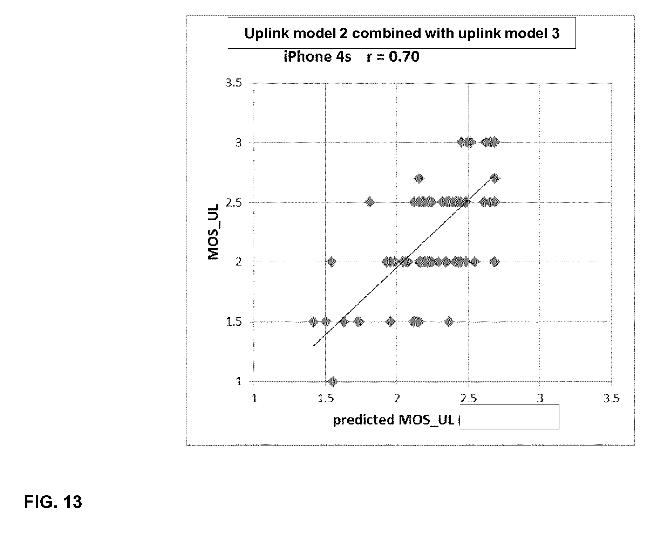

FIG. 13 illustrates a scatter plot of measured MOS values (y-axis) vs predicted MOS values (x-axis) calculated by averaging MOS values calculated using the second and the third models for the speech quality in the uplink direction. As indicated in FIG. 13, the correlation for the combination of the second and third models was 0.70, which was higher than the correlation established for each of these models alone.

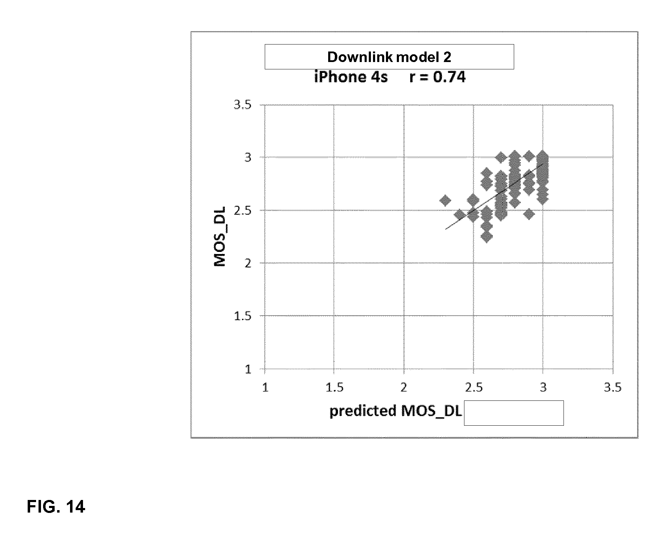

FIG. 14 illustrates a scatter plot of measured MOS values (y-axis) vs predicted MOS values (x-axis) calculated using the second model for the speech quality in the downlink direction.

While the models described herein were developed based on the empirical data obtained in an experimental set-up for voice calls between a mobile terminal and a fixed terminal, similar models hold for voice calls between a mobile terminal and any mobile coupling node within the 3G network, not necessarily the fixed terminal. For example, such a mobile coupling node could be an intermediate node in the 3G telecommunications network that couples the mobile terminal to the fixed terminal, in case the voice call is a mobile-to-fixed call, or it could be an intermediate node in the 3G telecommunications network that couples the two mobile terminals, in case the voice call is a mobile-to-mobile call.

If a mobile terminal may be considered to be one "end point" of a voice call, a mobile coupling node is, in general, not the end point of the voice call. Nevertheless, while methods described herein are for calculating speech quality between a mobile terminal and a mobile coupling node, the speech quality of the entire voice link (i.e. the speech quality from a mobile terminal, via the mobile coupling node, to either another mobile terminal or a fixed terminal) can be calculated by concatenating two models for the two parts of the entire voice link - an uplink model for the first mobile terminal to the mobile coupling node (one part of the entire link) and a downlink model for the mobile coupling node to either the second mobile terminal or the fixed terminal (the other part of the link). Thus, a method for predicting speech quality between a first mobile terminal and a second terminal (either mobile or fixed) communicatively connected to the first mobile terminal by a mobile coupling node would include any of the method steps for calculating the speech quality indicator in one direction for the first part of the link (first mobile terminal to the mobile coupling node) combined with any of the method steps for calculating the speech quality in the other direction for the second part of the link (mobile coupling node to the other terminal). In general the quality of the complete link is determined by the worst case part of the link. For example, in order to calculate speech quality between such a first mobile terminal A and a second mobile terminal B in the direction from A to B, the method would include the steps of calculating the speech quality indicator in the uplink direction for mobile A (according to any of the uplink speech quality models presented herein), calculating the speech quality indicator in the downlink direction for mobile B (according to any of the downlink speech quality models presented herein), and taking the lowest MOS prediction over the two models to obtain the speech quality indicator for the A to B direction. The speech quality in the B to A direction is calculated in the same manner using the uplink direction for mobile B and the downlink direction for mobile A.

The calculated speech quality indicators for any parts of the voice links may then be used e.g. in 24/7 quality monitoring, network optimization, and individual customer complaint analysis, including root cause analysis. For example when a low quality MOS is observed (e.g. MOS < 2) the corresponding model parameters can be used to find the underlying cause for this low quality.

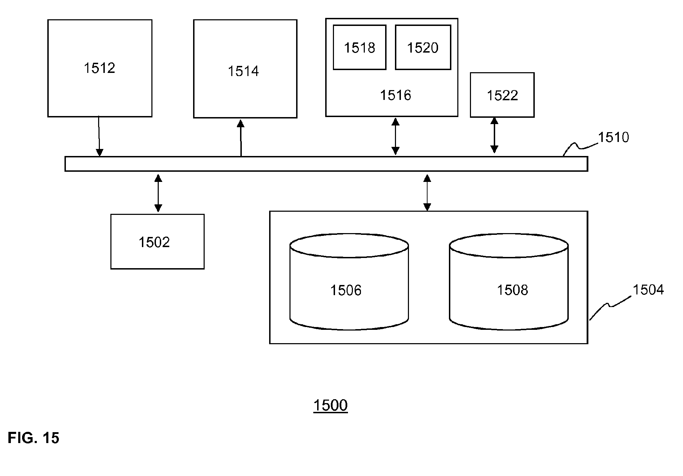

FIG. 15 shows a block diagram illustrating an exemplary data processing system 1500 that may be used to calculate a speech quality indicator, according to one embodiment of the present disclosure.

Data processing system 1500 may include at least one processor 1502 coupled to memory elements 1504 through a system bus 1510. As such, the data processing system may store program code within memory elements 1504. Further, processor 1502 may execute the program code accessed from memory elements 1504 via system bus 1510. In one aspect, data processing system 1500 may be implemented as a computer that is suitable for storing and/or executing program code. It should be appreciated, however, that system 1500 may be implemented in the form of any system including a processor and memory that is capable of performing the functions described within this specification.

Memory elements 1504 may include one or more physical memory devices such as, for example, local memory 1506 and one or more bulk storage devices 1508. Local memory may refer to random access memory or other non-persistent memory device(s) generally used during actual execution of the program code. A bulk storage device may be implemented as a hard drive or other persistent data storage device. The processing system 1500 may also include one or more cache memories (not shown) that provide temporary storage of at least some program code in order to reduce the number of times program code must be retrieved from bulk storage device 1508 during execution.

Input/output (I/O) devices depicted as input device 1512 and output device 1514 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter 1516 may also be coupled to data processing system to enable it to become coupled to other systems, computer systems, remote network devices, and/or remote storage devices through intervening private or public networks. The network adapter may, in particular, comprise a data receiver 1518 for receiving data that is transmitted by said systems, devices and/or networks to said data and a data transmitter 1520 for transmitting data to said systems, devices and/or networks. Modems, cable modems, and Ethernet cards are examples of different types of network adapter that may be used with data processing system 1500.

The memory elements 1504 may store an application (not shown). It should be appreciated that data processing system 1500 may further execute an operating system (not shown) that can facilitate execution of the application. The application, being implemented in the form of executable program code, can be executed by data processing system 1500, e.g., by processor 1502. Responsive to executing the application, data processing system 1500 may be configured to perform one or more method steps described herein.

Persons skilled in the art will recognize that while the elements 1502-1522 are shown in FIG. 15 as separate elements, in other embodiments their functionality could be implemented in lesser number of individual elements or distributed over a larger number of components.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 1502 described herein.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A computer-implemented method for predicting speech quality in a voice call between a mobile terminal and a mobile coupling node, the voice call carried out at least partially over a 3G telecommunications network, the method comprising:

   obtaining M values $(Power\_KPI_i, i=1,...M)$ of a power parameter measured M times at different points in time over a first time interval of the duration of the voice call,
   wherein the power parameter is a parameter indicative of a transmitted power in one of a first direction and a second direction of the voice call,
   the first direction being an uplink direction from the mobile terminal to the mobile coupling node, the second direction being a downlink direction from the mobile coupling node to the mobile terminal;
   calculating a power factor (Power_Factor) for the voice call based on the M values of the power parameter; and
   based on the calculated power factor, calculating a speech quality indicator for the other one of the first direction and the second direction.

2. The computer-implemented method of claim 1, wherein the speech quality indicator is calculated for the downlink direction, and wherein the M values comprise values of the power parameter in the uplink direction, the power parameter being an uplink transmit power (UL_TxPow).

3. The computer-implemented method of claim 2, further comprising determining an Inter Radio Access Technology Hand Over KPI (IRATHO) indicative of whether a handover from the 3G telecommunications network to a 2G telecommunications network occurred during the voice call, wherein the speech quality indicator is calculated further based on the IRATHO.

4. The computer-implemented method of claim 3, wherein the handover is determined to have occurred during the voice call when a predefined message indicative of an attempt of the handover, e.g. a "RANAP RELOCATION COMMAND" message, is captured.

5. The computer-implemented method of claim 1, wherein the speech quality indicator is calculated for the uplink direction, and wherein the M values comprise values of the power parameter in the downlink direction, the power parameter being downlink code power value (DL_NBtCPV).

6. The computer-implemented method according to claim 5, further comprising determining a bit error rate factor (UL_BER_Factor) indicative of the bit error rate (UL_BER) of the voice call in the uplink direction, wherein the speech quality indicator is calculated further based on the BER factor.

7. The computer-implemented method according to claim 6, wherein the determination of the BER factor comprises:

   obtaining N values $(UL\_BER_j, j=1,...N)$ of a BER measured N times at different points in time over a second time interval of the duration of the voice call, and
   calculating the BER factor (UL_BER_Factor) based on the N values of the BER.

8. The computer-implemented method according to any one of claims 5-7, wherein the speech quality indicator comprises a first intermediate speech quality indicator, the method further comprising:

   determining a first additional parameter (BERclass10) indicative of whether the N values of the BER (UL_BER) contain a value larger than a predefined value (BERmax);
   determining a second additional parameter (event2b) indicative of whether one or more conditions for a 3G handover to an inter-frequency neighbor have been met during the voice call, wherein, preferably, an event that the one or more conditions for the 3G handover to the inter-frequency neighbor are met is an event 2b as defined in the 3GPP standard, e.g. as defined in TS 25.331 of the 3GPP standard;

determining a third additional parameter (event3a) indicative of whether one or more conditions for a handover from the 3G telecommunications network to a 2G telecommunications network have been met during the voice call, wherein, preferably, an event that the one or more conditions for the handover from the 3G telecommunications network to the 2G telecommunications network are met is an event 3a as defined in the 3GPP standard, e.g. as defined in TS 25.331 of the 3GPP standard;

based on the determined first, second, and third additional parameters, calculating a second intermediate speech quality indicator for the uplink direction; and

calculating a final speech quality indicator based on the first and second intermediate speech quality indicators.

9. The computer-implemented method according to claim 8, wherein the final speech quality indicator is calculated as an average of the first and second intermediate speech quality indicators.

10. The computer-implemented method according to any one of the preceding claims, wherein the first time interval is a period of time over the entire duration of the voice call.

11. A computer-implemented method for predicting speech quality in an uplink direction in a voice call between a mobile terminal and a mobile coupling node, the voice call carried out at least partially over a 3G telecommunications network, the method comprising:

obtaining N values $(BER\_KPI_j, j=1,...N)$ of a bit error rate (BER) measured N times at different points in time over at least a part of the entire duration of the voice call;

determining a first parameter (BERclass10) indicative of whether the N values of the BER contain a value larger than a predefined value (BERmax);

determining a second parameter (event2b) indicative of whether one or more conditions for a 3G handover to an inter-frequency neighbor have been met during the voice call, wherein, preferably, an event that the one or more conditions for the 3G handover to the inter-frequency neighbor are met is an event 2b as defined in the 3GPP standard, e.g. as defined in TS 25.331 of the 3GPP standard;

determining a third parameter (event3a) indicative of whether one or more conditions for a handover from the 3G telecommunications network to a 2G telecommunications network have been met during the voice call, wherein, preferably, an event that the one or more conditions for the handover from the 3G telecommunications network to the 2G telecommunications network are met is an event 3a as defined in the 3GPP standard, e.g. as defined in TS 25.331 of the 3GPP standard; and

calculating a speech quality indicator for the uplink direction based on the determined first, second, and third parameters.

12. The computer-implemented method according to any one of the preceding claims, wherein the speech quality indicator comprises a mean opinion score (MOS) or a derivative thereof.

13. A computer program product, preferably implemented on computer-readable non-transitory storage medium, comprising software code portions configured for, when executed in a computer, carrying out method steps according to any one of the claims 1-12.

14. A device comprising at least a processor configured to carry out method steps according to any one of the claims 1-12.

**FIG. 1**

FIG. 2

```
┌─────────────────────────────────────────────────────────┐
│              SET UP EXPERIMENTAL VOICE CALLS              │
│                          302                             │
└─────────────────────────────────────────────────────────┘
                             │
                             ▼
┌─────────────────────────────────────────────────────────┐
│   PERFORM MEASUREMENTS OF ONE OR MORE KPIs AND SPEECH    │
│  QUALITY AT DIFFERENT TIMES DURING EACH OF THE VOICE CALLS│
│                          304                             │
└─────────────────────────────────────────────────────────┘
                             │
                             ▼
┌─────────────────────────────────────────────────────────┐
│    AVERAGE MEASURED VALUES OF EACH OF THE ONE OR MORE KPIs│
│                          306                             │
└─────────────────────────────────────────────────────────┘
                             │
                             ▼
┌─────────────────────────────────────────────────────────┐
│ OBTAIN A SCATTER PLOT OF THE WEIGHTED AVERAGED ONE OR MORE│
│          KPIs vs MEASURED SPEECH QUALITY                 │
│                          308                             │
└─────────────────────────────────────────────────────────┘
                             │
                             ▼
┌─────────────────────────────────────────────────────────┐
│   DETERMINE THE MONOTONIC RELATIONSHIP FOR THE MODEL     │
│                          310                             │
└─────────────────────────────────────────────────────────┘
```

300

FIG. 3

Side A

MOBILE TERMINAL

Network

Side B

FIXED TERMINAL

RNC

Electric
coupling into
the smartphone

WAV player

looped reference
speech

Degraded speech

uplink
measurement

UE trace

MOS

400

FIG. 4

| MEAN OPINION SCORE | ABSOLUTE QUALITY |
|---|---|
| 5 | EXCELLENT |
| 4 | GOOD |
| 3 | FAIR |
| 2 | POOR |
| 1 | BAD |

500

**FIG. 5**

| measurement | KPI |
|---|---|
| 1 | 3.1 |
| 2 | 1.4 |
| 3 | 1.1 |
| 4 | 1.8 |
| 5 | 0.8 |
| 6 | 2.2 |
| 7 | 1.1 |
| 8 | 0.9 |
| 9 | 4.2 |
| 10 | 1.1 |
| **Lp min** | **0.8** |
| **Lp 0.2** | **1.57** |
| **Lp 1.0 (average)** | **1.77** |
| **Lp 5.0** | **2.78** |
| **Lp MAX** | **4.2** |

FIG. 6

FIG. 7

FIG. 8

```
┌─────────────────────────────────────────────────────────────┐
│        OBTAIN M MEASURED VALUES OF A POWER PARAMETER          │
│                            902                                │
└─────────────────────────────────────────────────────────────┘
                               │
                               ▼
┌─────────────────────────────────────────────────────────────┐
│    CALCULATE A POWER FACTOR FOR THE CALL BASED ON THE         │
│             OBTAINED M MEAURED VALUES                         │
│                            904                                │
└─────────────────────────────────────────────────────────────┘
                               │
                               ▼
┌─────────────────────────────────────────────────────────────┐
│        CALCULATE SPEECH QUALITY INDICATOR BASED ON           │
│                    THE POWER FACTOR                           │
│                            906                                │
└─────────────────────────────────────────────────────────────┘
```

900

FIG. 9

FIG. 10

FIG. 11

**Uplink model 3**
iPhone 4s   r = 0.68

$y = 0.748x^3 - 0.572x^2 + 0.558x + 1.99$

MOS_UL

BERclass10 - 0.35*event2bCLIP1 - 0.6*event3aCLIP1

**FIG. 12**

**Uplink model 2 combined with uplink model 3**

iPhone 4s    r = 0.70

FIG. 13

FIG. 14

1500

**FIG. 15**

EUROPEAN SEARCH REPORT

Application Number

EP 14 17 2791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WERNER M ET AL: "Parameter-based speech quality measures for gsm", PERSONAL, INDOOR AND MOBILE RADIO COMMUNICATIONS, 2003. PIMRC 2003. 14TH IEEE PROCEEDINGS ON SEPT. 7-10, 2003, IEEE, PISCATAWAY, NJ, USA, vol. 2, 7 September 2003 (2003-09-07), pages 2611-2615, XP010678104, DOI: 10.1109/PIMRC.2003.1259200 ISBN: 978-0-7803-7822-3 | 1,6,7,9, 10,13,14 | INV. H04W24/08 |
| Y | * Section 1. Introduction Section 2. GSM Link parameters Section 3. Correlation of parameters and speech quality * ----- | 2-5,8 | |
| Y | ANTTI KURITTU NOKIA NETWORKS FINLAND: "Issues for the P.862 Implementorsâ Guide", ITU-T DRAFT ; STUDY PERIOD 2001-2004, INTERNATIONAL TELECOMMUNICATION UNION, GENEVA ; CH, vol. 9/12, 12 March 2004 (2004-03-12), pages 1-11, XP017499311, [retrieved on 2004-03-12] * Section Introduction Section Effect of mobile transmission power level * ----- -/-- | 2,5 | TECHNICAL FIELDS SEARCHED (IPC) H04W |

The present search report has been drawn up for all claims

| Place of search | Date of completion of the search | Examiner |
|---|---|---|
| Munich | 16 September 2014 | Wolf, William |

Europäisches
Patentamt

European
Patent Office

Office européen
des brevets

# EUROPEAN SEARCH REPORT

Application Number

EP 14 17 2791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALFONSO FERNANDEZ DURAN ET AL: "Effects of handover on Voice quality in wireless convergent networks", RADIO AND WIRELESS SYMPOSIUM, 2007 IEEE, IEEE, PISCATAWAY, NJ, USA, 1 January 2007 (2007-01-01), pages 23-26, XP031080022, ISBN: 978-1-4244-0444-5 * Section 1. Introduction Section 2. System architecture Section 4. Effect of handover on the conversation quality * | 3,4,8, 11,12 | |
| Y | WERNER M ET AL: "Quality control for AMR speech channels in GSM networks", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 3, 17 May 2004 (2004-05-17), pages 1076-1079, XP010718380, DOI: 10.1109/ICASSP.2004.1326735 ISBN: 978-0-7803-8484-2 * Abstract Section 1. Introduction Section 2. Parameter based speech quality measures * | 11,12 | |

TECHNICAL FIELDS
SEARCHED (IPC)

The present search report has been drawn up for all claims

| Place of search | Date of completion of the search | Examiner |
|---|---|---|
| Munich | 16 September 2014 | Wolf, William |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. WERNER ; P. VARY.** Quality Control for UMTS-AMR Speech Channels. *InterSpeech,* 2005, 3157-3160